# EUROPEAN PATENT SPECIFICATION

(11) **EP 2 456 048 B1**
(45) Date of publication and mention of the grant of the patent: **27.01.2016**
(21) Application number: 11188513.3
(22) Date of filing: 09.11.2011
(51) Int. Cl.: H02K 1/27, H02K 29/03

(54) **Rotor structure for a fault-tolerant permanent magnet electromotive machine and corresponding method**
Rotorstruktur für eine fehlertolerante elektromotorische Maschine mit Dauermagnet und entsprechendes Verfahren
Structure rotorique d'une machine électromotrice à aimants permanents et insensible aux défaillances et méthode correspondante

(30) Priority: 18.11.2010 US 949083
(43) Date of publication of application: 23.05.2012
(73) Proprietor: General Electric Company, Schenectady, NY 12345 (US)
(72) Inventor: Shah, Manoj, Niskayuna, NY New York 12309 (US); El-Refaie, Ayman Mohamed Fawzi, Niskayuna, NY New York 12309 (US)
(74) Representative: Illingworth-Law, William Illingworth

(56) References cited:
- EP-A2- 1 777 795
- EP-A2- 2 237 390
- DE-A1-102005 025 944
- DE-A1-102005 046 165
- DE-A1-102009 044 196
- JP-A- 2006 054 932
- JP-A- 2007 336 771
- US-A1- 2007 252 465
- US-A1- 2008 143 207

## Description

### BACKGROUND

The present invention is generally related to permanent magnet (PM) electromotive machines, such as electric generators and/or electric motors and, more particularly to fault tolerant PM machines.

It is known that electromotive machines may utilize permanent magnets (PMs) as a primary mechanism to generate magnetic fields of high magnitudes for electrical induction. Unlike machines that involve electromagnets, which can be electrically controlled, e.g., selectively turned on and off, PMs remain on. That is, magnetic fields produced by the PM persist due to their inherent ferromagnetic properties. Consequently, should an electromotive machine having PMs experience a fault, it may not be possible to expediently stop the machine because of the persistent nature of the magnetic fields of the PMs causing the machine to continue operating. Such faults may be in the form of fault currents produced due to defects in the stator windings or mechanical faults arising from defective or worn-out mechanical components disposed within the machine. The inability to disable the PM during the above-mentioned or other related faults may damage the PM machine and/or devices coupled thereto.

In view of the foregoing considerations, various machine and/or control architectures have been proposed to develop fault-tolerant PM machines. One type of fault-tolerant PM machine that has gained wide acceptance in view of its relatively low-cost and operational versatility involves fractional slot pitch concentrated windings. This type of fault-tolerant PM machine offers substantial reliability but in operation the excited windings may generate a rich spectrum of space harmonics, including a number of asynchronous harmonics that do not contribute to form useful magnetomotive force (MMF) but can give raise to electromagnetic losses in various components of the machine, such as rotor magnets and magnetic steel structures. Measures have been proposed, such as the use of thin laminated magnetic steel with lower core loss and/or axially-segmented magnets, which may help to ameliorate rotor cooling requirements.

However, such measures are essentially approaches designed to just mitigate the symptoms but do little or nothing to overcome the fundamental issues. For example, such measures essentially accept to "live" with the asynchronous harmonics and just try to reduce their detrimental effects (e.g., electromagnetic losses) by "laminating" the magnets and the core. Thus, such measures are likely to sacrifice power efficiency and add incremental costs. In view of the foregoing considerations, it should be appreciated that there continues to be a need of further improvements in connection with fault tolerant PM machines. The document US 2007/0252465 A1 discloses an outer-rotor.type magneto generator in which eddy-current losses are controlled.

### BRIEF DESCRIPTION

In one aspect of the invention a rotor structure for a permanent magnet electromotive machine is provided. At least one back-core lamination is disposed around a plurality of permanent magnets. The back-core lamination comprises a plurality of high-reluctance regions arranged to attenuate asynchronous magnetic flux components while avoiding synchronous magnetic flux components. The asynchronous and synchronous magnetic flux components result from spatial harmonic components of a plurality of fractional-slot concentrated windings of a stator of the machine.

In another aspect of the invention an electromotive permanent magnet machine is provided. A stator includes a plurality of fractional-slot concentrated windings. A rotor is operatively coupled to the stator. The rotor has a plurality of stacked back-core laminations disposed around a plurality of permanent magnets. Each back-core lamination comprises a plurality of high-reluctance regions arranged to attenuate asynchronous magnetic flux components while avoiding synchronous magnetic flux components. The asynchronous and synchronous magnetic flux components result from spatial harmonic components of the windings of the stator of the machine.

In yet another aspect, a method to construct a rotor for a permanent magnet electromotive machine is provided. A back-core lamination is disposed around a plurality of permanent magnets in a rotor of the machine. A plurality of high-reluctance regions is defined in the back-core lamination. The plurality of high-reluctance regions may be located to maximize a reluctance in a path of asynchronous magnetic flux components while having a minimal effect on the synchronous components thereby maximizing a power density of the machine. The asynchronous and synchronous magnetic flux components result from spatial harmonic components of a plurality of fractional-slot concentrated windings of a stator of the machine.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic representation of an example embodiment of a fault tolerant permanent magnet machine including a back-core structure embodying aspects of the present invention.
FIG. 2 illustrates an example magnetic flux density distribution of the PM machine shown in FIG. 1.
FIG. 3 illustrates one example embodiment of a back-core lamination embodying aspects of the present invention.
FIG. 4 illustrates another example embodiment of a back-core lamination embodying aspects of the present invention.
FIG. 5 illustrates a stack of back-core laminations as may be arranged to promote a flow of cooling gas through an axially-extending cooling conduit.

### DETAILED DESCRIPTION

As discussed in greater detail below, aspects of the invention are directed to fault tolerant permanent magnet machines as may involve fractional slot pitch concentrated windings. As used herein, the term "fault tolerant" refers to magnetic and physical decoupling between various machine coils/phases while reducing noise, torque ripple, and harmonic flux components.

The inventors of the present invention propose an innovative and elegant approach suitable for substantially reducing electromagnetic rotor losses generally associated with a spectrum of space harmonics of the fractional slot pitch concentrated windings. As previously noted, such spectrum includes a number of asynchronous harmonics that do not contribute to useful MMF. The proposed approach may be advantageously configured to maximize the magnetic reluctance encountered by the asynchronous harmonics while having essentially no impact on the useful or synchronous MMF component thus maximizing the power density of the machine.

The description below illustrates one example embodiment of a fault tolerant permanent magnet machine that may benefit from aspects of the present invention. It will be appreciated that aspects of the present invention are not limited to the example embodiment described below.

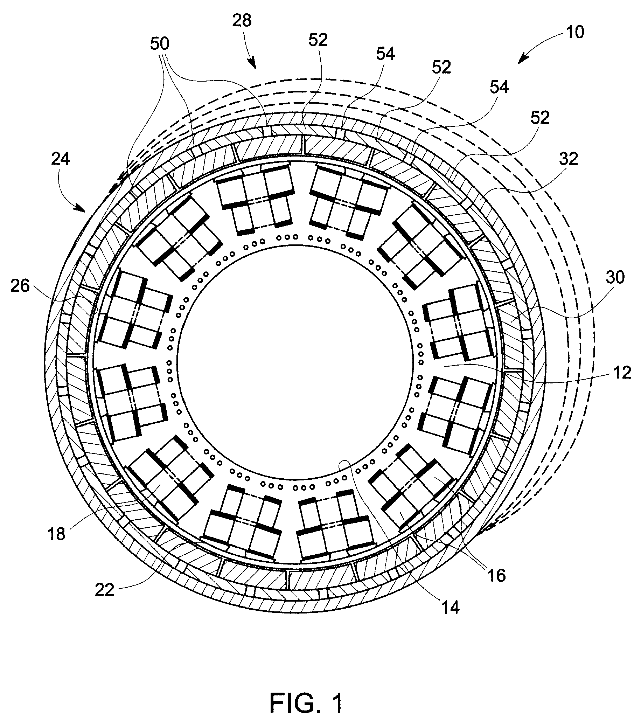

FIG. 1 is a schematic representation of a fault tolerant permanent magnet (PM) machine 10. The PM machine 10 includes a stator 12 having a stator core 14. The stator core 14 defines a plurality of step-shaped stator slots 16 including fractional-slot concentrated windings 18 wound within the step-shaped stator slots 16. The fractional-slot concentrated windings provide magnetic and physical decoupling between various phases and coils of the PM machine 10. In the illustrated embodiment, the step-shaped stator slots 16 have a two step configuration. A respective slot wedge 22 may be used to close an opening of a respective step-shaped stator slot 16. It will be appreciated that step-shaped stator slots 16 may include more than two steps.

A rotor 24 including a rotor core 26 may be disposed outside and concentric with the stator 12. In one embodiment, the rotor core 26 includes axial segments that are electrically insulated from each other to reduce eddy current losses. The rotor core 26 includes a laminated back-core structure 28 disposed around a plurality of permanent magnets 30. Back-core structure 28 is generally referred to in the art as a "back-iron" structure. Back-core structure 28 may comprise a plurality of stacked laminations. As described in more detail below, "lamination" refers to a thin ring or circumferentially-segmented structure, a plurality of which are typically stacked together along a rotor axis to form a machine component.

In accordance with aspects of the present invention, each back-core lamination may include a plurality of high-reluctance regions 50 arranged to attenuate the asynchronous magnetic flux components while avoiding the synchronous magnetic flux components, which result from the spatial harmonic components of the fractional-slot concentrated windings of the machine.

As illustrated in FIG. 1, each back-core lamination may form a circumferentially segmented structure. For example, the segmented back-core lamination may be made up of a plurality of spaced apart arcuate segments 52, positioned to define a plurality of gaps 54 between adjacent segments. That is, in this example embodiment the plurality of gaps 54 constitutes the plurality of high-reluctance regions 50.

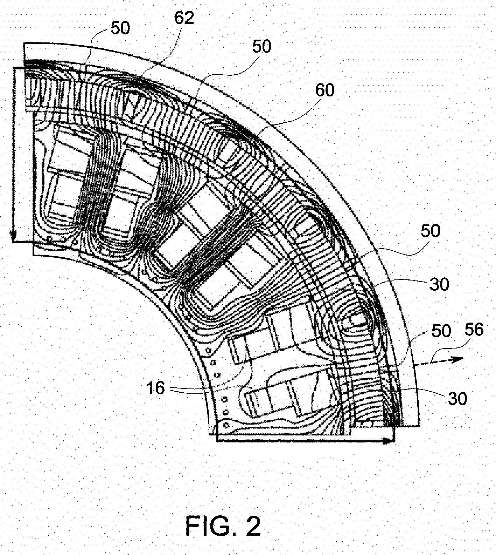

FIG. 2 illustrates an example magnetic flux density distribution of PM machine 10 (FIG. 1). Solid line 60 represents an example flux path for asynchronous components, which do not contribute to MMF formation, while lines 62 represent example magnetic flux paths for the synchronous components, which generate useful MMF. It should be appreciated from FIG. 2 that the location of high-reluctance regions 50 may be arranged to maximize the magnetic reluctance encountered by the asynchronous harmonics while having essentially no impact on the useful or synchronous MMF components. In one example embodiment, each high reluctance region 50 may be intersected by a respective direct pole axis (e.g., axis 56) of a corresponding magnet.

Returning to FIG. 1, PM machine 10 may include at least one retaining ring 32 disposed around back-core structure 28 to retain magnets 30. As will be appreciated by one skilled in the art, as illustrated in FIG. 1, PM machine 10 represents an inside-out configuration, wherein the rotor 24 rotates outside the stator 12. It will be appreciated that rotor 24 may be disposed inside the stator 12. For readers desirous of further background information, reference is made to US patent application 12/249,620, commonly assigned to the assignee of the present invention and herein incorporated by reference.

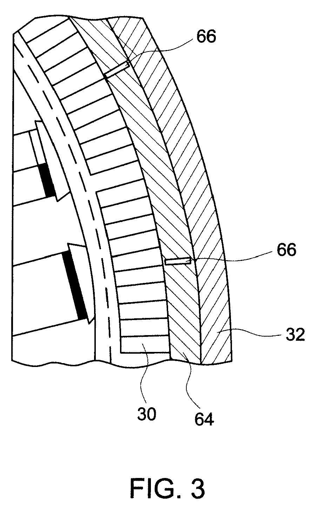

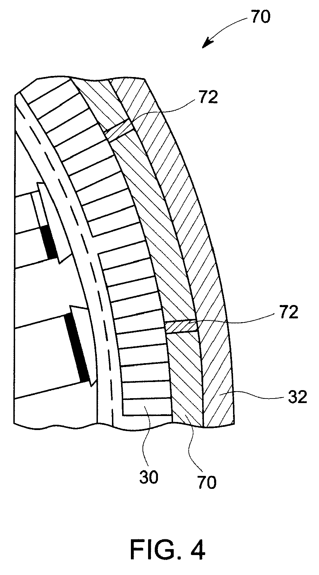

FIG. 3 illustrates another example embodiment of a back-core lamination 64, which may be configured as an integral mechanical structure (in lieu of a circumferentially segmented structure). In this example embodiment, the integral back-core lamination includes a plurality of openings 66, which constitutes the plurality of high-reluctance regions. If for a given application the back-core lamination is desired to provide a solid ring shape, it is contemplated that the high reluctance regions may be defined by a plurality of blind holes in lieu of opening 66. For example, not breaking across the entire thickness of the lamination. It will be appreciated that the high reluctance regions are not limited to any particular geometrical shape. Accordingly, the rectangular shape of openings 66 shown in FIG. 3, gaps 54 shown in FIG. 1 or non-magnetic regions 72 in FIG. 4 should be construed in an example sense and not in a limiting sense.

As shown in FIG. 4, in another example embodiment, an integral back-core lamination 70 may comprise a bi-state magnetic material, where the bi-state magnetic material is thermally treated using techniques well-understood in the art (e.g., laser heat treatment) to define a plurality of non-magnetic regions 72, which in this example embodiment constitute the plurality of high-reluctance regions.

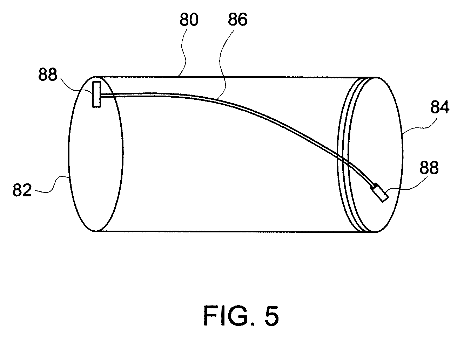

It will be appreciated that the plurality of high-reluctance regions (e.g., openings or gaps) may be adapted for providing optional rotor cooling conduits. For example, as shown in FIG. 5, a stack of back-core laminations 80 may define an axially-extending conduit between respective ends 82 and 84 of the stack, schematically represented by line 86, which may be used to allow passage to a cooling gas. If desired, the respective locations of openings or gaps 88 may be arranged in each lamination of the stack 80 to promote the flow of the cooling gas through the axially-extending conduit. For example, the respective location of each opening or gap may be selected to define between ends 82 and 84 a skewed or slanted arrangement for the cooling conduit to provide a fanning effect, as the rotor rotates. This may be achieved if each respective opening or gap 88 in each lamination is positioned in correspondence with line 86.

In operation, aspects of the present invention provide an improved back-core structure as may be used in electromotive machines involving fractional slot pitch concentrated windings. The back-core arrangement may be configured with high reluctance regions suitably positioned to reduce asynchronous magnetic flux components and in turn reduce electromagnetic losses associated with such asynchronous components while having virtually no effect on the synchronous magnetic flux (useful MMF) components. For example, this may be helpful to reduce the cooling needs of the rotor of the machine and/or improve the power density of the machine.

While only certain features of the invention have been illustrated and described herein, many modifications and changes will occur to those skilled in the art. It is, therefore, to be understood that the appended claims are intended to cover all such modifications and changes as fall within the scope of the invention.

## Claims

1. A rotor structure (24) for a permanent magnet electromotive machine (10) comprising:
at least one back-core lamination (28) disposed around a plurality of permanent magnets (30), said at least one back-core lamination (28) comprising a plurality of high-reluctance regions (50) arranged to attenuate asynchronous magnetic flux components while avoiding synchronous magnetic flux components, the asynchronous and synchronous magnetic flux components resulting from spatial harmonic components of a plurality of fractional-slot concentrated windings (18) of a stator (12) of the machine (10), **characterized in that**
the plurality of high-reluctance regions (50) in a stack of back-core laminations defines an axially-extending conduit (86), wherein the axially-extending conduit is configured to promote a flow of cooling gas through the axially-extending conduit.

2. The rotor structure of claim 1, wherein said at least one back-core lamination (28) comprises a circumferentially segmented structure.

3. The rotor structure of claim 2, wherein the segmented back-core lamination comprises a plurality of spaced apart arcuate segments (52) positioned to define a plurality of gaps (54) between adjacent segments, wherein the plurality of gaps (54) constitutes the plurality of high-reluctance regions (50).

4. The rotor structure of claim 1, wherein said at least one back-core lamination comprises an integral mechanical structure.

5. The rotor structure of claim 4, wherein the integral back-core lamination comprises a plurality of openings (66), wherein the plurality of openings (66) constitutes the plurality of high-reluctance regions (50).

6. The rotor structure of either of claim 4 or 5, wherein the integral back-core lamination (70) comprises a bi-state magnetic material.

7. The rotor structure of claim 6, wherein the bi-state magnetic material is thermally processed to define the plurality of high-reluctance regions (50).

8. The rotor structure of any one of the preceding claims, wherein the plurality of high-reluctance regions (50) is positioned to maximize a reluctance in a path of the asynchronous magnetic flux components while having a minimal effect on the synchronous component, thereby maximizing a power density of the machine (10).

9. The rotor structure of any one of the preceding claims, wherein a respective direct pole axis (56) of the plurality of magnets intersects a corresponding high-reluctance region.

10. The rotor structure of any one of the preceding claims, wherein the magnets are axially segmented.

11. The rotor structure of any one of the preceding claims, further comprising at least one retaining ring (32) disposed around said at least one back-core lamination.

12. A method to construct a rotor for a permanent magnet electromotive machine comprising:
disposing a back-core lamination around a plurality of permanent magnets in a rotor of the machine;
defining a plurality of high-reluctance regions in the back-core lamination; and
locating the plurality of high-reluctance regions to maximize a reluctance in a path of asynchronous magnetic flux components while having a minimal effect on the synchronous components thereby maximizing a power density of the machine, the asynchronous and synchronous magnetic flux components resulting from spatial harmonic components of a plurality of fractional-slot concentrated windings of a stator of the machine, and configuring the high reluctance regions as an axially extending conduit to promote a flow of cooling gas.

## Patentansprüche

1. Rotorstruktur (24) für eine elektromotorische Dauermagnetmaschine (10), welche Folgendes umfasst:
mindestens eine rückseitige Kernlamelle (28), die um mehrere Dauermagnete (30) herum angeordnet ist, wobei die mindestens eine rückseitige Kernlamelle (28) mehrere Hochreluktanzregionen (50) umfasst, die zum Abschwächen asynchroner Magnetflusskomponenten geeignet sind, während synchrone Magnetflusskomponenten vermieden werden, wobei die asynchronen und synchronen Magnetflusskomponenten aus räumlichen Oberschwingungskomponenten mehrerer konzentrierter Bruchlochwicklungen (18) eines Stators (12) der Maschine (10) resultieren, **dadurch gekennzeichnet, dass** die mehreren Hochreluktanzregionen (50) in einem Stapel von rückseitigen Kernlamellen einen sich axial erstreckenden Kanal (86) definieren, wobei der sich axial erstreckende Kanal zur Förderung eines Stromes von Kühlgas durch den sich axial erstreckenden Kanal konfiguriert ist.

2. Rotorstruktur nach Anspruch 1, wobei die mindestens eine rückseitige Kernlamelle (28) eine umfänglich segmentierte Struktur umfasst.

3. Rotorstruktur nach Anspruch 2, wobei die segmentierte rückseitige Kernlamelle mehrere beabstandete bogenförmige Segmente (52) umfasst, die derart positioniert sind, dass sie mehrere Spalten (54) zwischen benachbarten Segmenten definieren, wobei die mehreren Spalten (54) die mehreren Hochreluktanzregionen (50) darstellen.

4. Rotorstruktur nach Anspruch 1, wobei die mindestens eine rückseitige Kernlamelle eine integrale mechanische Struktur umfasst.

5. Rotorstruktur nach Anspruch 4, wobei die integrale rückseitige Kernlamelle mehrere Öffnungen (66) umfasst, wobei die mehreren Öffnungen (66) die mehreren Hochreluktanzregionen (50) darstellen.

6. Rotorstruktur nach entweder Anspruch 4 oder 5, wobei die integrale rückseitige Kernlamelle (70) ein Zwei-Zustands-Magnetmaterial umfasst.

7. Rotorstruktur nach Anspruch 6, wobei das Zwei-Zustands-Magnetmaterial thermisch verarbeitet ist, um die mehreren Hochreluktanzregionen (50) zu definieren.

8. Rotorstruktur nach einem der vorhergehenden Ansprüche, wobei die mehreren Hochreluktanzregionen (50) zum Maximieren einer Reluktanz in einem Pfad der asynchronen Magnetflusskomponenten positioniert sind, während sie eine minimale Wirkung auf die synchronen Komponenten haben, wodurch eine Leistungsdichte der Maschine (10) maximiert wird.

9. Rotorstruktur nach einem der vorhergehenden Ansprüche, wobei eine jeweilige direkte Polachse (56) der mehreren Magnete eine entsprechende Hochreluktanzregion schneidet.

10. Rotorstruktur nach einem der vorhergehenden Ansprüche, wobei die Magnete axial segmentiert sind.

11. Rotorstruktur nach einem der vorhergehenden Ansprüche, welche ferner mindestens einen Haltering (32) umfasst, der um die mindestens eine rückseitige Kernlamelle herum angeordnet ist.

12. Verfahren zum Herstellen eines Rotors für eine elektromotorische Dauermagnetmaschine, welches Folgendes umfasst:
Anordnen einer rückseitigen Kernlamelle um mehrere Dauermagnete in einem Rotor der Maschine;
Definieren mehrerer Hochreluktanzregionen in der rückseitigen Kernlamelle; und
Positionieren der mehreren Hochreluktanzregionen zum Maximieren einer Reluktanz in einem Pfad asynchroner Magnetflusskomponenten, während sie eine minimale Wirkung auf die synchronen Komponenten haben, wodurch eine Leistungsdichte der Maschine maximiert wird, wobei die asynchronen und synchronen Magnetflusskomponenten aus räumlichen Oberschwingungskomponenten mehrerer konzentrierter Bruchlochwicklungen eines Stators der Maschine resultieren, und Konfigurieren der Hochreluktanzregionen als ein sich axial erstreckender Kanal zum Fördern eines Stromes von Kühlgas.

## Revendications

1. Structure de rotor (24) pour une machine électromotrice à aimants permanents (10) comprenant :
au moins un feuilletage (28) au dos du noyau disposé autour d'une pluralité d'aimants permanents (30), ledit au moins un feuilletage (28) au dos du noyau comprenant une pluralité de régions de haute reluctance (50) aménagées pour atténuer les composantes de flux magnétique asynchrones tout en évitant des composantes de flux magnétique synchrones, les composantes de flux magnétique asynchrones et synchrones résultant de composantes harmoniques spatiales d'une pluralité d'enroulements concentrés (18) à nombre fractionnaire d'encoches d'un stator (12) de la machine (10), **caractérisé en ce que** :
la pluralité de régions de haute reluctance (50) dans un empilement de feuilletages au dos du noyau définissent un conduit (86) s'étendant axialement, dans laquelle le conduit s'étendant axialement est configuré pour promouvoir un écoulement de gaz de refroidissement à travers le conduit s'étendant axialement.

2. Structure de rotor selon la revendication 1, dans laquelle ledit au moins un feuilletage (28) au dos du noyau comprend une structure segmentée circonférentiellement.

3. Structure de rotor selon la revendication 2, dans lequel le feuilletage segmenté au dos du noyau comprend une pluralité de segments arqués espacés (52) positionnés pour définir une pluralité d'intervalles (54) entre des segments adjacents, dans laquelle la pluralité d'intervalles (54) constituent la pluralité de régions de haute reluctance (50).

4. Structure de rotor selon la revendication 1, dans laquelle ledit au moins un feuilletage au dos du noyau comprend une structure mécanique d'un seul tenant.

5. Structure de rotor selon la revendication 4, dans laquelle le feuilletage d'un seul tenant au dos du noyau comprend une pluralité d'ouvertures (66), dans laquelle la pluralité d'ouvertures (66) constituent la pluralité de régions de haute reluctance (50).

6. Structure de rotor selon l'une ou l'autre des revendications 4 ou 5, dans laquelle le feuilletage d'un seul tenant (70) au dos du noyau comprend un matériau magnétique à deux états.

7. Structure de rotor selon la revendication 6, dans laquelle le matériau magnétique à deux états est traité à chaud pour définir la pluralité de régions de haute reluctance (50).

8. Structure de rotor selon l'une quelconque des revendications précédentes, dans laquelle la pluralité de régions de haute reluctance (50) sont positionnées pour maximiser la reluctance dans un trajet des composantes de flux magnétique asynchrones tout en ayant un effet minimal sur la composante synchrone, ce qui a pour effet de maximiser la densité de puissance de la machine (10).

9. Structure de rotor selon l'une quelconque des revendications précédentes, dans laquelle un axe polaire direct respectif (56) de la pluralité d'aimants coupe une région de haute reluctance correspondante.

10. Structure de rotor selon l'une quelconque des revendications précédentes, dans laquelle les aimants sont axialement segmentés.

11. Structure de rotor selon l'une quelconque des revendications précédentes, comprenant en outre au moins un anneau de retenue (32) disposés autour dudit au moins un feuilletage au dos du noyau.

12. Procédé de construction d'un rotor pour une machine électromotrice à aimants permanents, comprenant les étapes consistant à :
disposer un feuilletage au dos du noyau autour d'une pluralité d'aimants permanents dans un rotor de la machine ;
définir une pluralité de régions de haute reluctance dans le feuilletage au dos du noyau ; et
localiser la pluralité de régions de haute reluctance pour maximiser la reluctance dans un trajet de composantes de flux magnétique asynchrones tout en ayant un effet minimal sur les composantes synchrones, ce qui a pour effet de maximiser la densité de puissance de la machine, les composantes de flux magnétique asynchrones et synchrones résultant de composantes harmoniques spatiales d'une pluralité d'enroulements concentrés à nombre fractionnaire d'encoches d'un stator de la machine et configurer les régions de haute reluctance sous la forme d'un conduit s'étendant axialement pour promouvoir un écoulement de gaz de refroidissement.
